# FASCICULE DE BREVET EUROPEEN

(11) **EP 4 502 806 B1**
(45) Date de publication et mention de la délivrance du brevet: **18.03.2026**
(21) Numéro de dépôt: 24192251.7
(22) Date de dépôt: 01.08.2024
(51) Int. Cl.: G06F 9/50

(54) **PLATEFORME POUR L EXÉCUTION D APPLICATIONS AVIONIQUES, PROCÉDÉ ET PROGRAMME D ORDINATEUR ASSOCIÉS**
PLATTFORM ZUR DURCHFÜHRUNG VON AVIONIKANWENDUNGEN, VERFAHREN UND COMPUTERPROGRAMM DAFÜR
PLATFORM FOR EXECUTING AVIONICS APPLICATIONS, ASSOCIATED METHOD AND COMPUTER PROGRAM

(30) Priorité: 03.08.2023 FR 2308428
(43) Date de publication de la demande: 05.02.2025
(73) Titulaire: THALES, 92190 Meudon (FR)
(72) Inventeur: BOULAUD, Olivier, 33700 MERIGNAC (FR)
(74) Mandataire: Lavoix

(56) Documents cités:
- EP-A1- 3 792 759
- US-A1- 2019 205 177
- JEAN, GATTI, FAURA, PAUTET, ROBERT: "A software approach for managing shared resources in multicore IMA systems", 32ND DIGITAL AVIONICS SYSTEMS CONFERENCE (DASC), IEEE, 5 October 2013 (2013-10-05), XP032553222
- L�FWENMARK, NADJM-TEHRANI: "Challenges in Future Avionic Systems on Multi-Core Platforms", 2014 IEEE INTERNATIONAL SYMPOSIUM ON SOFTWARE RELIABILITY ENGINEERING WORKSHOPS, IEEE, 3 November 2014 (2014-11-03), pages 115 - 119, XP032703983

## Description

### Domaine

L'invention se rapporte au domaine de l'informatique. L'invention se rapporte plus particulièrement au domaine de l'informatique en temps réel et plus particulièrement encore à l'exécution de programmes d'ordinateurs au sein d'un dispositif avionique informatisé en temps réel qui exécute en parallèle des processus indépendants.

### Art antérieur

Dans de nombreux dispositifs temps réel, les applications doivent s'exécuter de manière déterministe. Ce déterminisme prend notamment la forme d'un déterminisme temporel : pour son exécution l'application se voit allouer une plage temporelle d'exécution et l'exécution doit être effectuée dans cette plage temporelle allouée. Ce déterminisme prend également la forme d'un déterminisme de résultat : au cours de son exécution dans la période temporelle qui lui est allouée, l'application doit souvent produire un résultat d'exécution. L'exécution de différentes applications par le dispositif temps réel fait l'objet d'un ordonnancement. Cet ordonnancement est effectué par un ordonnanceur fonctionnant au sein du dispositif temps réel. Il a pour objectif de distribuer les ressources et le temps entre toutes les applications.

La situation est complexifiée lorsque le dispositif en temps réel doit gérer l'exécution, en parallèle, de plusieurs applications. C'est par exemple le cas dans le domaine de l'avionique. Dans ce domaine, un dispositif d'exécution peut par exemple être utilisé pour exécuter, en parallèle, des applications qui peuvent remplir des mêmes fonctions similaires ou non. Ces applications peuvent être identiques (il s'agit du même code exécuté deux fois) ou différentes (il s'agit de deux codes différents). Ces fonctions, qu'elles soient différentes, identiques ou similaires, peuvent être amenées à utiliser des ressources. Il s'agit par exemple de ressources d'entrée/sorties (appelées ressources I/O) ou de messages. Or, dans le domaine de l'avionique embarquée par exemple, l'augmentation du nombre de fonctions à réaliser par les dispositifs électroniques est en continuelle augmentation. A l'inverse, des caractéristiques clés de ces dispositifs électroniques sont réduites au maximum pour des raisons économiques comme écologiques : il est ainsi nécessaire de disposer de plus de puissance de calcul tout en réduisant la consommation et l'emprunte SWaP (de l'anglais pour « Size, Weight and Power »).

Les dispositifs électroniques sur lesquels de tels traitements en temps réel parallèles sont effectués se composent généralement d'un ou de plusieurs processeurs et de mémoire partagée. Il s'agit par exemple de processeurs multicœurs : en effet, l'augmentation de la puissance de calcul passe désormais forcément par l'utilisation de SoC (de l'anglais pour *« System on Chip »*) qui intègrent, entre autre, plusieurs cœurs permettant l'exécution de logiciels en parallèle, moyennant le partage de ressources, et en particulier, l'accès à des périphériques d'entrée sortie (IO) distants.

Ainsi, un système d'exploitation temps réel adapté s'exécute sur de tels dispositifs électroniques et ce système d'exploitation ordonnance l'exécution des applications, à l'aide de l'ordonnanceur, dans des partitions. Une partition se définit comme l'allocation d'un temps d'exécution et de ressources (CPU, mémoire) déterminés. Ainsi, pour son exécution, chaque application dispose d'une partition allouée à un canal d'exécution (par exemple un processeur ou un cœur de processeur). L'isolation temporelle et spatiale de la partition est la garantie de la sécurité du dispositif. Dans ce cadre, un module donné comprend par exemple deux canaux d'exécution distincts, chaque canal, exécutant pendant un temps donné, une partition.

L'utilisation d'architectures multicœurs, dans le domaine avionique passe alors par la définition d'une architecture logicielle permettant de conserver les propriétés indispensables pour une plateforme IMA (Certification Incrémentale) qui sont : le partitionnement robuste étendu (« ERP » de l'anglais « *extended robust partitioning »*) et l'incrémentalité. Ces deux propriétés fondamentales requièrent :
- qu'une application (ou qu'un groupe d'applications maitrisées) n'a pas d'influence sur les autres applications du moment qu'elle(s) reste(nt) dans le budget (de temps, de mémoire, ...) qui est alloué ;
- que les temps des services offerts restent maitrisés quelles que soient les conditions d'exécution tout en restant compatibles avec un objectif de dérive maximum de basculement de partitions *(« partition swtching »)* à ne pas dépasser : cela signifie que pour passer d'une application à une autre, un temps maximum ne doit pas être dépassé.

On connaît du document EP 3 792 759 A1 une plateforme informatique comprenant au moins une partition d'accès à des ressources partagées.

Or, un problème se pose notamment pour l'accès aux ressources I/O. En effet, certains périphériques matériels dédiés aux IO ne supportent pas d'accès concurrents. Par exemple, si deux partitions s'exécutent en parallèle (par exemple par des cœurs différents d'un processeur), certains périphériques ne permettent pas à ces deux partitions d'accéder, en même temps, au même périphérique matériel pour obtenir la ou les valeurs qu'ils fournissent. Pour offrir une solution à ce problème d'accès un serveur d'IO a été mis au point (appelé « serveur IOTC »). Ce serveur mis en œuvre par une partition spécifique, centralise les accès aux ressources. Le serveur est donc placé en tant qu'intermédiaire entre les ressources (notamment IO) et les partitions qui souhaitent y accéder (soit en lecture, soit en écriture). Ainsi, ces ressources sont exclusivement accédées par le serveur IOTC et le serveur IOTC met les données résultantes à disposition des partitions qui souhaitent y accéder. En revanche, ce sont alors les données logicielles en question qui deviennent partagées. La conséquence en est que l'accès, en lecture ou en écriture, à une donnée peut se retrouver en concurrence entre une (ou plusieurs) partitions (s) consommatrices et l'IOTC.

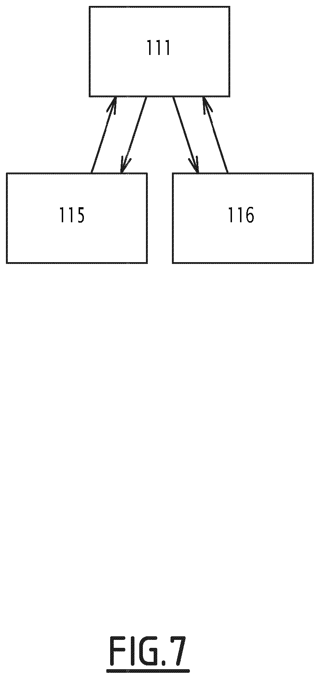

Un tel cas est illustré par la figure 7 sur laquelle la référence 111 désigne un serveur IOTC et les références « 115 » et « 116 » désignent deux partitions souhaitant accéder aux données mises en disposition par le serveur IOTC. Ce serveur IOTC met ainsi en œuvre une mémoire partagée accessible par chacune des partions 115, 116.

Le problème est alors d'assurer, dans un contexte multicœurs, qu'à un instant donné, une partition consommatrice de ressources (qu'il s'agisse de l'IOTC ou d'une partition avionique) peut, quoi qu'il arrive, accéder à la dernière valeur disponible pour cette ressource. Le problème est également d'assurer qu'à un instant donné, une partition productrice (qu'il s'agisse de l'IOTC ou d'une application) peut, quoi qu'il arrive, enregistrer une valeur (message, ou valeur destinée à un autre module par exemple).

Pour résoudre ce problème, il aurait été possible d'exiger que les partitions prévoient, dans leurs budgets temporel d'exécution, une marge suffisante pour absorber les contentions (interférences) possibles à l'initiative des autres partitions en concurrence. Cette solution, cependant, grève le temps global disponible pour l'exécution des partitions et ceci n'est ni souhaitable, ni efficace compte tenu des contraintes listées précédemment.

### Résumé

L'invention vise à résoudre ces problématiques de l'art antérieur. Plus particulièrement, l'invention vise à permettre à l'ensemble des partitions productrices et des partitions consommatrices de données de disposer d'un accès à une donnée sans qu'il ne soit nécessaire d'augmenter le temps global d'exécution ou de prévoir des mécanismes de blocage d'accès.

À cet effet, l'invention se rapporte à une plateforme pour l'exécution d'applications avioniques.

La plateforme comprend un processeur multicœurs, une mémoire, une unité de management et une pluralité de ressources partagées.

La mémoire comprend un espace mémoire partagé dont l'accès est contrôlé par l'unité de management ; une pluralité de partitions avioniques exécutant une pluralité d'applications avioniques par le processeur multicœurs ; et un serveur IOTC d'accès aux ressources partagées par les partitions avioniques.

L'espace mémoire partagé est configuré pour effectuer tout partage de données entre une partition productrice et un groupe prédéterminé de N partitions consommatrices de données exclusivement via une structure de partage de données allouée dans cette espace, la ou chaque partition productrice/consommatrice de données correspondant au serveur IOTC ou à l'une des partitions avioniques.

La structure de partage de données comprend au moins deux adresses d'enregistrement utilisables par la partition productrice de données pour écriture de deux données différentes.

Suivant d'autres aspects avantageux de l'invention, la plateforme comprend une ou plusieurs des caractéristiques suivantes, prise(s) isolément ou suivant toutes les combinaisons techniquement possibles :
- l'espace mémoire partagé comprend une première zone mémoire partagée et pour chaque partition avionique, une deuxième zone mémoire partagée ;
   la première zone mémoire partagée étant accessible en lecture seule à toutes les partitions avioniques et chaque deuxième zone mémoire partagée étant accessible en lecture/écriture à la partition avionique correspondante ;
   l'unité de management étant configurée pour faire respecter la lecture/écriture dans ces différentes zones par les différentes partitions avioniques;
   avantageusement, chaque structure de partage de données est répartie entre lesdites zones en fonction de son besoin d'écriture/lecture de données correspondantes ;
- la structure de partage de données comprend en outre au moins une métadonnée de détermination d'une adresse d'enregistrement de données à utiliser par la ou chaque partition productrice/consommatrice de données ;
- la structure de partage de données présente une structure de premier type lorsque N est strictement supérieur à 1, la partition productrice de données correspondant au serveur IOTC et chaque partition consommatrice de données correspondant à l'une des partitions avioniques ;
   la structure de premier type comprenant N+2 adresses d'enregistrement ;
- parmi les N+2 adresses d'enregistrement de la structure de premier type :
   deux adresses sont dédiées à l'écriture par la partition productrice de données d'une donnée précédente et d'une donnée suivante ; et
   N autres adresses sont dédiées à la lecture par chacune des N partitions consommatrices de données dudit groupe prédéterminé, de la donnée précédente ;
- la structure de partage de données présente une structure de deuxième type lorsque N est égal à 1, la partition productrice de données correspondant au serveur IOTC et la partition consommatrice de données correspondant à une partition avionique unique ;
- lesdites au moins deux adresses d'enregistrement formant une fille d'attente de lecture/écriture d'une donnée précédente et d'une donnée suivante ;
- la structure de partage de données présente une structure de troisième type lorsque N est égal à 1, la partition productrice correspondant à une partition avionique unique et la partition consommatrice correspondant au serveur IOTC ;
- lesdites au moins deux adresses d'enregistrement formant une fille d'attente de lecture/écriture d'une donnée précédente et d'une donnée suivante ;
- l'espace mémoire partagé comprend une structure de deuxième type et/ou une structure de troisième type pour chaque partition avionique ;
- l'espace mémoire partagé comprend une structure de premier type pour chaque groupe de N partitions avioniques partageant les données produites par le serveur IOTC ;
- l'espace mémoire partagé comprend une pluralité de structure de partage de données, chaque structure de partage de données correspondant à une structure de premier type, à une structure de deuxième type ou à une structure de troisième type.

L'invention se rapporte également à un procédé pour l'exécution d'applications avioniques, mis en œuvre par la plateforme tel que mentionné précédemment, comprenant l'étape d'écriture de deux données différentes dans deux adresses d'enregistrement de ladite structure de partage de données, par la partition productrice de données.

L'invention se rapport enfin à un programme d'ordinateur comportant des instructions logicielles qui, lorsqu'elles sont exécutées par un dispositif électronique programmable, mettent en œuvre le procédé tel que défini précédemment.

### Brève description des figures

Ces caractéristiques et avantages de l'invention apparaitront à la lecture de la description qui va suivre, donnée uniquement à titre d'exemple non limitatif, et faite en référence aux dessins annexés, sur lesquels :
- [Fig. 1] la figure 1 est une vue schématique d'une plateforme pour l'exécution d'applications avioniques selon l'invention ;
- [Fig. 2] la figure 2 est une vue schématique d'une architecture logicielle mise en œuvre par la plateforme de la figure 1 ;
- [Fig. 3] [Fig. 4] [Fig. 5] les figures 3 à 5 sont des vues schématiques illustrant le fonctionnement de différentes structures de données mises en œuvre par la plateforme de la figure 1 ;
- [Fig. 6] la figure 6 est une vue schématique d'un espace mémoire partagé mis en œuvre par la plateforme de la figure 1 ; et
- [Fig. 7] la figure 7 illustre une solution connue dans l'art.

### Description d'un mode de réalisation

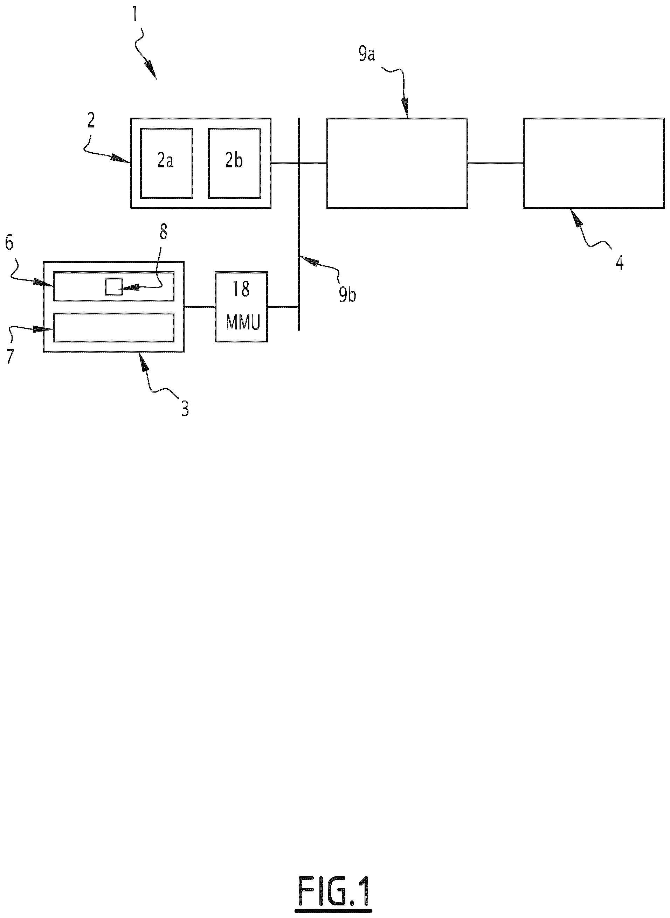

On présente, en relation avec la figure 1, l'architecture d'une plateforme 1 pour l'exécution d'applications avioniques permettant l'accès concurrent à des données, sans augmenter le temps de latence et en respectant le partitionnement robuste et en permettant l'incrémentabilité.

La plateforme 1 comprend un processeur multicœurs 2, une mémoire 3 et des ressources partagées 4. Le processeur multicœurs 2 comprends par exemple au moins deux cœurs, dénotés par 2a et 2b sur la figure 1. La mémoire 3 comprend une mémoire vive 6 et une mémoire non-volatile 7. La mémoire non-volatile 7 est apte à stocker une pluralité d'applications qui sont exécutables par le processeur multicœurs 2 comme cela sera expliqué plus en détail par la suite. La mémoire vive 6 comprend un espace mémoire partagé 8 qui peut être une mémoire cache de processeur, par exemple de niveau L2 ou une mémoire physique de type DDR. Les ressources partagées 4 présentent notamment des périphériques IO, tels que AnlO, DsIO, A429, Fbus, Xtalk, connus en soi. Ces ressources partagées sont raccordées au processeur multicœurs 2 via par exemple une interface de communication 9a en utilisant un bus de données 9b. Par ailleurs, une unité de management 18 est associée à la mémoire 3. Cette unité 18 est appelée MMU (de l'anglais « Memory Management Unit ») et permet de garantir le correct partage de la mémoire 3 dans le respect des autorisations de lecture et écriture pour chaque partition à une adresse donnée.

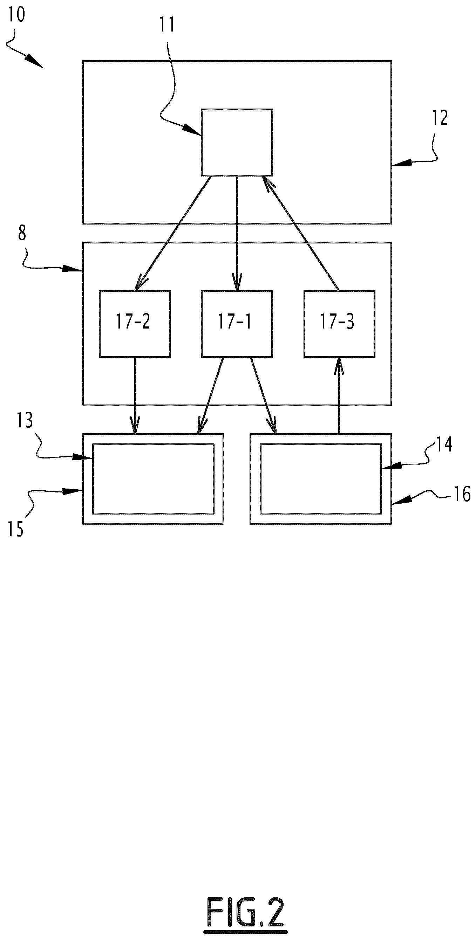

La figure 2 illustre un exemple d'architecture logicielle 10 mise en œuvre sur la plateforme matérielle 1 de la figure 1. Plus particulièrement, dans cet exemple d'architecture logicielle, au moins une application stockée dans la mémoire non-volatile 7 met en œuvre un serveur IOTC 11 d'accès aux ressources partagées 4. Ce serveur IOTC s'exécute au sein d'un noyau 12 du système d'exploitation temps réel et constitue un point d'accès unique aux ressources partagées 4. Le noyau 12 forme une partition et peut s'exécuter sur un ou plusieurs cœurs du processeur multicœurs 2. Dans cet exemple, au moins deux autres applications stockées dans la mémoire non-volatile 7 mettent en œuvre deux applications avioniques 13, 14 qui s'exécutent au sein de deux partitions avioniques 15, 16 respectivement.

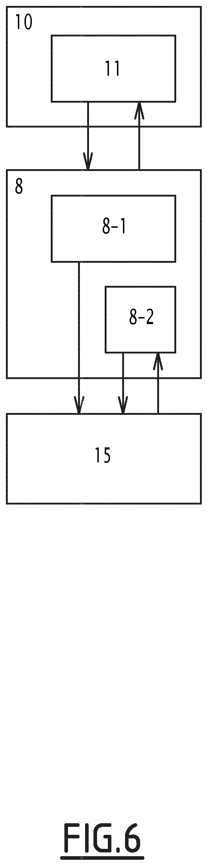

En référence à la figure 6, l'espace mémoire partagé 8 comprend une première zone mémoire partagée 8-1 et pour chaque partition avionique 15, 16, une deuxième zone mémoire partagée 8-2. Sur la figure 6, une seule deuxième zone partagée 8-2 est illustrée en relation avec la partition avionique 15. La première zone mémoire partagée 8-1 est accessible en lecture seule à toutes les partitions avioniques 15, 16. La deuxième zone mémoire partagée 8-2 est accessible en lecture/écriture à la partition avionique correspondante 15. L'unité de management 18 permet notamment de faire respecter la lecture/écriture dans ces différentes zones par les différentes partitions avioniques 15, 16.

Le serveur IOTC 11 et les partitions avioniques 15, 16 sont aptes à partager des données entre eux en utilisant l'espace mémoire partagé 8. Plus particulièrement, le partage de données entre les partitions avioniques 15, 16 d'une part et le serveur IOTC 11 d'autre part est possible uniquement via l'espace mémoire partagé 8.

Pour ce faire, l'espace mémoire partagé 8 comprend au moins trois structures de partage de données 17-1, 17-2 et 17-3. Chaque structure de partage de données 17-1, 17-2 et 17-3 est dédiée à un type de partage particulier entre une partition productrice et une ou plusieurs partitions consommatrices de données.

Par la suite, par « partition productrice de données », on entend le serveur IOTC 11 ou l'une des partitions avioniques 15, 16, lorsqu'il (elle) produit des données destinées respectivement à une ou plusieurs partitions avioniques 15, 16 ou au serveur IOTC 11.

Par « partition consommatrice de données », on entend le serveur IOTC 11 ou l'une des partitions avioniques 15, 16 lorsqu'il (elle) reçoit des données produites respectivement par l'une des partitions avioniques 15, 16 ou par le serveur IOTC 11.

Chaque structure de partage de données 17-1, 17-2 et 17-3 est répartie dans l'espace mémoire partagé 8 entre les différentes zones mémoire partagées 8-1, 8-2 en fonction en fonction des besoins de la ou des partition(s) avionique(s) correspondante(s), de modification ou non, de chaque donnée ou métadonnée, comme cela sera expliqué plus en détail par la suite.

Chaque partition avionique 15, 16 est mise en œuvre en utilisant par exemple une librairie d'accès aux structures de partage de données correspondantes. Cette librairie d'accès matérialise les procédés d'accès aux données de ces structures.

Chaque structure de partage de données 17-1, 17-2 et 17-3 comprend une pluralité d'adresses d'enregistrement d'une même donnée pour permettre un accès concurrent à cette donnée par la partition productrice et la ou chaque partition consommatrice de données. Ce nombre d'enregistrements est choisi en fonction du type de la structure, comme cela sera expliqué plus en détail par la suite.

En outre, chaque structure de partage de données 17-1, 17-2 et 17-3 comprend au moins une métadonnée de détermination d'une adresse d'enregistrement de données à utiliser. Autrement dit, grâces aux métadonnées, la partition productrice et la ou chaque partition consommatrice peut déterminer l'adresse d'enregistrement pour écriture/lecture de la donnée correspondante.

### Structure de premier type

Dans l'exemple décrit, la structure de partage de données 17-1 est une structure de premier type, appelée également structure de données KUS (de l'anglais « Kernel to User Sampling »), qui est dédiée à la diffusion par le serveur IOTC 11 d'une donnée à plusieurs partitions soit en parallèle, soit séquentiellement ou les deux. Autrement dit, pour cette structure de premier type, le serveur IOTC 11 agit comme une partition productrice de données et les partitions avioniques 15 et 16 agissent comme des partitions consommatrices de données.

D'une manière générale, une structure de premier type KUS est utilisée lorsque le serveur IOTC 11 a besoin de diffuser des données vers un groupe prédéterminé de N partitions avioniques où N est nombre entier supérieur ou égale à 0. Ce nombre peut notamment être égal à 0 ou 1 pour une certification incrémentale. La structure de premier type permet au serveur IOTC 11 d'écrire au moins deux données différentes (une donnée précédente et une donnée suivante) à transmettre, tout en permettant aux N partitions avioniques du groupe correspondant de lire la donnée précédente. En d'autres termes, l'accès concurrent à la donnée est possible grâce à cette structure de données. Pour que l'écriture et la lecture des données puissent être effectuées en concurrence, les métadonnées de la structure de premier type sont utilisées par le serveur IOTC 11 et les partitions avioniques pour déterminer l'adresse mémoire d'écriture (respectivement l'adresse mémoire de lecture) de la donnée courante. Pour permettre une lecture et une écriture concurrente, N+2 adresses sont utilisées dans cette structure de données (N correspondant au nombre de partitions dans le groupe correspondant), de sorte à ce qu'à tout moment, le serveur IOTC 11 puisse écrire une donnée suivante à une adresse tandis que les partitions avioniques puissent lire une donnée précédente à une autre adresse. Les métadonnées utilisées permettent ainsi de déterminer, à chaque besoin d'écriture ou de lecture, à quelle adresse, parmi les N+2 disponibles, l'opération de lecture ou d'écriture doit être effectuée.

Pour maintenir un partitionnement robuste, le serveur IOTC 11 gère ces métadonnées : il est le garant de la détermination des adresses en fonction des opérations d'écriture ou de lecture à effectuer. Le serveur IOTC 11 réserve, au fur et à mesure des écritures à effectuer, une adresse parmi les N+2 adresses disponibles. La présence d'une adresse disponible est toujours assurée, du fait du nombre N+2 adresses utilisables. Lorsqu'une partition avionique souhaite lire une donnée, elle identifie, au sein des métadonnées de la structure, une adresse disponible en lecture. Pour prévenir une corruption de ces métadonnées, avant chaque écriture, le serveur IOTC 11 compare la cohérence des métadonnées mises à disposition par les partitions avioniques lors d'une écriture précédente et d'une écriture en cours. Lorsqu'une incohérence est détectée, une alerte est levée.

Selon un exemple particulier, les métadonnées associées à la structure de premier type comprennent un indice de verrouillage de chaque adresse d'enregistrement parmi les N+2 adresses. Cet indice montre si l'adresse correspondante est en cours de lecture par une partition avionique. La structure de donnée dispose de N+1 indices de verrouillage donc par construction, il y a toujours une adresse de disponible pour l'écriture suivante.

La structure de premier type 17-1 est répartie dans l'espace mémoire partagé 8 entre la première zone mémoire partagée 8-1 (pour le stockage des données et des métadonnées) et chaque deuxième zone mémoire partagée 8-2 (pour le stockage des métadonnées) associée à la partition avionique 15, 16 correspondante.

D'une manière générale, dans l'espace mémoire partagé il y a au moins autant de structures de premier type qu'il y a de groupes de N partitions avioniques partageant des données issues du serveur IOTC 11.

### Structure de deuxième type

La structure de partage de données 17-2 est une structure de deuxième type, appelée également structure de données KUQ (de l'anglais « Kernel to User Queuing »), qui est dédiée à la transmission, par le serveur IOTC 11, de données à une unique partition avionique. Dans l'exemple de la figure 2, il s'agit de la partition avionique 15. Autrement dit, pour cette structure de deuxième type, le serveur IOTC 11 agit comme une partition productrice de données et la partition avionique 15 agit comme une partition consommatrice de données.

D'une manière générale, une structure de deuxième type KUQ permet au serveur IOTC 11 d'écrire une donnée suivante, tout en permettant à la partition avionique correspondante de lire une donnée précédente. En d'autres termes, l'accès concurrent à la donnée est possible grâce à cette structure de données. Pour ce faire, la structure de deuxième type définit une file d'attente (appelée également FIFO) de profondeur P, où le nombre P est nombre entier supérieur ou égal à 1, avantageusement supérieur ou égal à 2. Ainsi, cette structure définit P adresses d'enregistrement de données consécutives à transmettre.

Pour que l'écriture et la lecture des données puissent être effectuées en concurrence, les métadonnées de la structure de données sont utilisées par le serveur IOTC 11 et la partition avionique correspondante pour déterminer l'adresse mémoire d'écriture (respectivement l'adresse mémoire de lecture) de la donnée correspondante. Les métadonnées utilisées permettent ainsi de déterminer, à chaque besoin d'écriture ou de lecture, à quelle adresse, parmi les P disponibles, l'opération de lecture ou d'écriture doit être effectuée.

Pour maintenir un partitionnement robuste, le serveur IOTC 11 gère ces métadonnées : il est le garant de la détermination des adresses en fonction des opérations d'écriture ou de lecture à effectuer. Pour ce faire, il effectue, lors de la détermination de l'adresse à utiliser pour effectuer une écriture de données, une copie des métadonnées mises à disposition par la partition avionique correspondante et il compare les métadonnées mises à disposition avec celles qu'il a conservées de l'itération d'écriture précédente. Cette comparaison permet de vérifier que la partition avionique correspondante n'effectue pas une « lecture » erronée, au sens où la partition n'indique pas que la lecture de la donnée puisse être effectuée à un emplacement non cohérent avec celui de l'itération d'écriture précédente.

Selon un exemple particulier, les métadonnées utilisées par le serveur IOTC 11 comprennent deux compteurs : un incrémenté à chaque lecture et l'autre incrémenté à chaque écriture. Le serveur IOTC 11 duplique le compteur de lecture dans la deuxième zone mémoire partagée 8-2 associée à la partition avionique 15 correspondante afin que cette partition 15 puisse l'incrémenter à chaque lecture. Lors de la détermination de l'adresse d'écriture le serveur IOTC 11 vérifie la cohérence du compteur de lecture dupliqué avant de mettre à jour le compteur de lecture original.

La structure de deuxième type 17-2 est répartie dans l'espace mémoire partagé 8 entre la première zone mémoire partagée 8-1 (pour le stockage des données et des métadonnées) et la deuxième zone mémoire partagée 8-2 (pour le stockage des métadonnées) associée à la partition avionique 15 correspondante.

D'une manière générale, il y a au moins autant de structures de deuxième type qu'il y a de partitions avioniques nécessitant de recevoir des données du serveur IOTC 11 de manière individuelle.

### Structure de troisième type

La structure de partage de données 17-3 est une structure de troisième type, appelée également structure de données UKQ (de l'anglais « User to Kernel Queuing »), qui est dédiée à la transmission, par une unique partition avionique, au serveur IOTC 11. Dans l'exemple de la figure 2, il s'agit de la partition avionique 16. Autrement dit, pour cette structure de troisième type, le serveur IOTC 11 agit comme une partition consommatrice de données et la partition avionique 16 agit comme une partition productrice de données.

D'une manière générale, une structure de troisième type UKQ permet au serveur IOTC 11 de lire une donnée suivante, tout en permettant à la partition avionique 16 correspondante d'écrire la donnée suivante à transmettre. En d'autres termes, l'accès concurrent à la donnée est possible grâce à cette structure de données. Pour ce faire, comme dans le cas précédent, la structure de troisième type définit une file d'attente (appelée également FIFO) de profondeur P, où le nombre P est nombre entier supérieur ou égal à 1, avantageusement supérieur ou égal à 2. Ainsi, cette structure définit P adresses d'enregistrement de données consécutives à transmettre.

Pour que l'écriture et la lecture des données puissent être effectuées en concurrence, les métadonnées de la structure de troisième type UKQ sont utilisées par la partition avionique correspondante et par le serveur IOTC 11 pour déterminer l'adresse mémoire d'écriture (respectivement l'adresse mémoire de lecture) de la donnée correspondante. Les métadonnées utilisées permettent ainsi de déterminer, à chaque besoin d'écriture ou de lecture, à quelle adresse, parmi les P disponibles, l'opération de lecture ou d'écriture doit être effectuée.

Pour maintenir un partitionnement robuste, le serveur IOTC 11 monitore ces métadonnées : il est le garant de la détermination des adresses de lecture à effectuer. Pour ce faire, il effectue, lors de la détermination de l'adresse à utiliser pour effectuer une lecture de données, une copie des métadonnées mises à disposition par la partition avionique correspondante et il compare les métadonnées mises à disposition avec celles qu'il a conservées de l'itération de lecture précédente. Cette comparaison permet de vérifier que la partition n'effectue pas une « écriture » erronée, au sens où la partition n'indique pas que l'écriture de la donnée puisse être effectuée à un emplacement non cohérent avec celui de l'itération de lecture précédente.

Selon un exemple particulier, les métadonnées utilisées par le serveur IOTC 11 comprennent deux compteurs : un incrémenté à chaque lecture et l'autre incrémenté à chaque écriture. Le serveur IOTC 11 duplique le compteur d'écriture dans la deuxième zone mémoire partagée associée à la partition avionique 16 correspondante afin que cette partition 16 puisse l'incrémenter à chaque écriture. Lors de la détermination de l'adresse de lecture, le serveur IOTC 11 vérifie la cohérence du compteur d'écriture dupliqué avant de mettre à jour le compteur d'écriture original.

La structure de troisième type 17-3 est répartie dans l'espace mémoire partagé 8 entre la première zone mémoire partagée 8-1 (pour le stockage des métadonnées) et la deuxième zone mémoire partagée (pour le stockage des données et des métadonnées) associée à la partition avionique 16 correspondante.

D'une manière générale, il y a au moins autant de structures de troisième type qu'il y a de partitions avioniques nécessitant de transmettre des données au serveur IOTC 11.

Dans certains exemples de réalisation, pour une partition avionique donnée, plusieurs structures de données de même type peuvent être mises en œuvre. Par exemple, si une partition avionique souhaite transférer, au serveur IOTC 11, deux types de données différentes, correspondant à deux types d'IO que le serveur IOTC 11 doit lui-même transférer à deux périphériques matériels d'IO, alors deux structures différentes de troisième type peuvent alors être utilisées. De même, pour le serveur IOTC 11 lorsqu'il doit permettre aux partitions de lire plusieurs types de données différentes provenant de plusieurs périphériques matériels d'IO, plusieurs structures différentes de premier ou de deuxième type peuvent alors être utilisées.

On illustre par la suite l'utilisation des structures de données précédemment présentées pour effectuer un partage de données au sein de la plateforme 1. Pour plus de simplicité dans la description, l'exemple de la figure 2 est utilisé pour illustrer les procédés de gestion et d'accès aux structures de données 17-1, 17-2, 17-3.

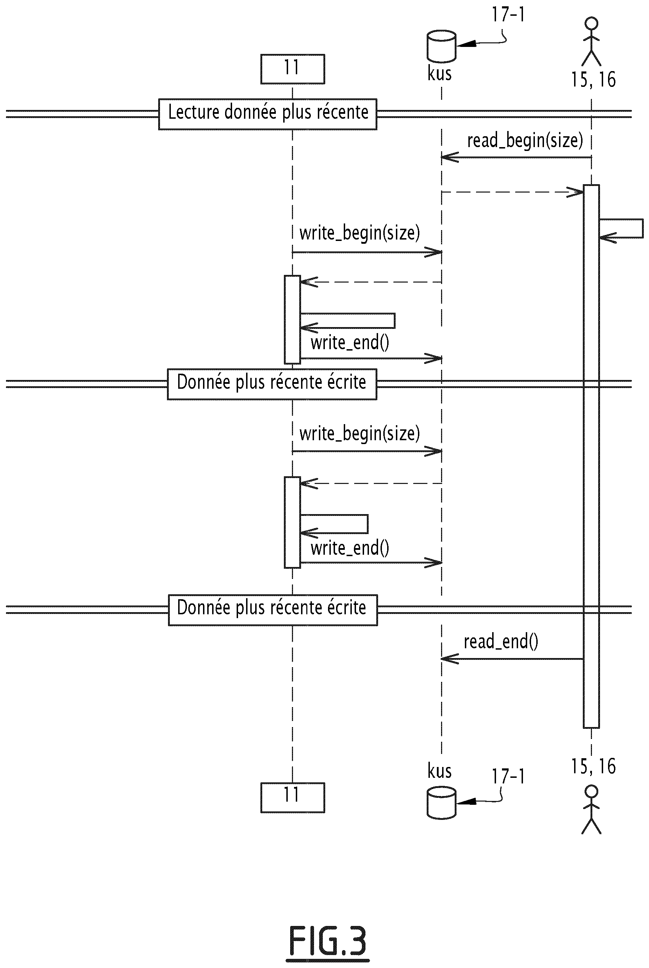

Dans la première situation, illustrée en relation avec la figure 3, le serveur IOTC 11 met à disposition, au sein de la structure de premier type 17-1 (KUS), pour un nombre déterminé N de partitions, des données en provenance d'un périphérique d'IO. Le périphérique d'IO génère des données à un rythme de génération qui lui est propre : la génération des données n'est pas synchronisée avec la consommation de celles-ci. Le serveur IOTC 11 récupère séquentiellement les données consécutives à transmettre et les met à disposition des N partitions 15, 16 qui en ont l'utilité. Dans cette situation, une concurrence est possible entre le serveur IOTC 11 et les partitions 15, 16. Ce mécanisme permet d'une part aux partitions 15, 16 de toujours pouvoir lire la donnée la plus récente produite par le serveur IOTC 11 et d'autre part, au serveur IOTC 11 de toujours pouvoir écrire une donnée suivante. Ces opérations doivent par ailleurs être réalisées sans que le serveur IOTC 11 ne puisse être mis en erreur par les partitions quant à l'adresse à laquelle la donnée suivante doit être enregistrée.

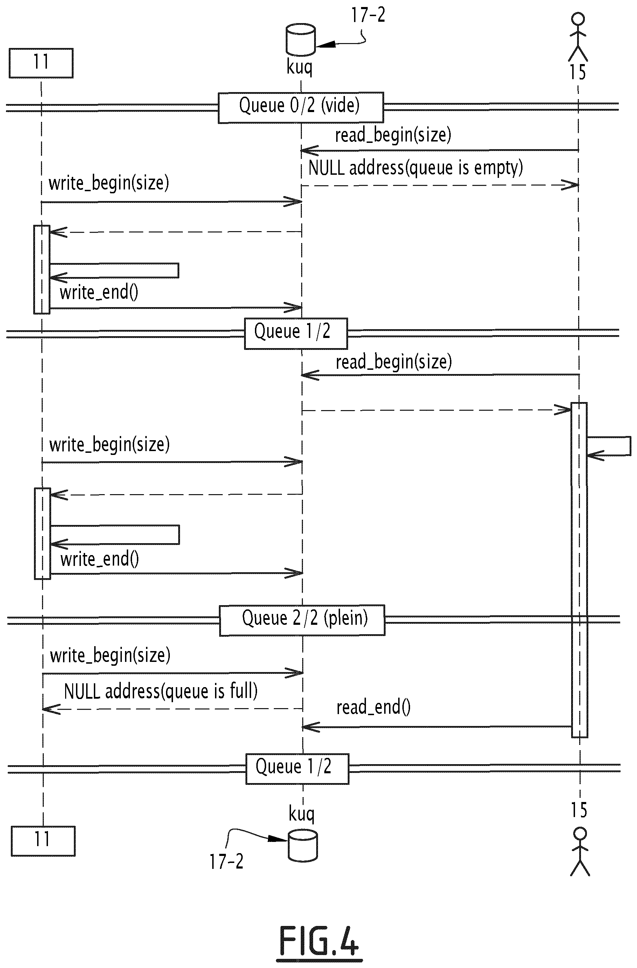

Dans la deuxième situation, illustrée en relation avec la figure 4, le serveur IOTC 11 met une donnée à disposition, pour une (seule) partition 15. Il s'agit par exemple d'une donnée en provenance d'un périphérique d'IO (AnlO, DsIO, A429, Fbus, Xtalk) ou d'un message. Le serveur IOTC 11 met la donnée à disposition à un rythme qui lui est propre : la mise à disposition n'est pas synchronisée avec la consommation des données. Dans cette situation, une concurrence est possible entre la partition productrice de données (serveur IOTC 11) et la partition consommatrice de données (la partition 15). Pour éviter cette situation, lors de la lecture de la donnée au début de la file d'attente par la partition 15, le serveur IOTC 11 a la possibilité d'écrire une donnée suivante dans l'adresse suivante de la file d'attente. Cette donnée suivante sera lue par la partition 15 après la fin de lecture de la donnée précédente.

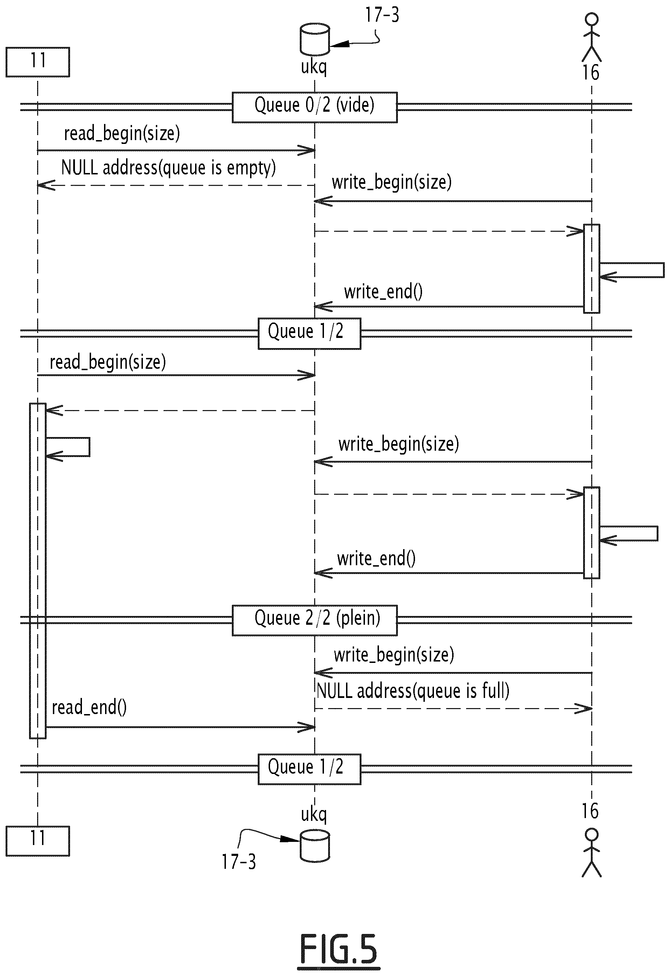

Dans la troisième situation, illustrée en relation avec la figure 5, les principes appliqués sont les mêmes que pour la deuxième situation. La différence est que le serveur IOTC 11 agit en tant que partition consommatrice de données et que la partition avionique 16 agit en tant que partition productrice de données.

Dans l'ensemble des situations, quel que soit le rôle qui lui est affecté (producteur ou consommateur), le serveur IOTC 11 s'assure de la cohérence des métadonnées qui sont présentes dans les structures de données correspondantes. De cette manière, le partitionnement robuste est conservé et le serveur IOTC 11 peut se prémunir de corruptions des métadonnées par les partitions et conserver son intégrité.

## Revendications

1. Plateforme (1) pour l'exécution d'applications avioniques, la plateforme (1) comprenant un processeur multicœurs (2), une mémoire (6, 7), une unité de management (18) et une pluralité de ressources partagées (4), la mémoire (6, 7) comprenant :
- une pluralité de partitions avioniques (15, 16) exécutant une pluralité d'applications avioniques (13, 14) par le processeur multicœurs (2) ; et
- un serveur IOTC (11) d'accès aux ressources partagées (4) par les partitions avioniques (15, 16) ;
**caractérisé en ce que** la plateforme (1) comporte en outre un espace mémoire partagé (8) dont l'accès est contrôlé par l'unité de management (18) , ledit espace mémoire partagé (8) étant configuré pour effectuer tout partage de données entre une partition productrice (11, 15, 16) et un groupe prédéterminé de N partitions consommatrices de données (11, 15, 16) exclusivement via une structure de partage de données (17-1, 17-2, 17-3) allouée dans cette espace (8), la ou chaque partition productrice/consommatrice de données (11, 15, 16) correspondant au serveur IOTC (11) ou à l'une des partitions avioniques (15, 16) ;
la structure de partage de données (17-1, 17-2, 17-3) comprenant au moins deux adresses d'enregistrement utilisables par la partition productrice de données (11, 15, 16) pour écriture de deux données différentes.

2. Plateforme (1) selon la revendication 1, dans laquelle l'espace mémoire partagé (8) comprend une première zone mémoire partagée (8-1) et pour chaque partition avionique (15, 16), une deuxième zone mémoire partagée (8-2) ;
la première zone mémoire partagée (8-1) étant accessible en lecture seule à toutes les partitions avioniques (15, 16) et chaque deuxième zone mémoire partagée (8-2) étant accessible en lecture/écriture à la partition avionique correspondante (15, 16) ;
l'unité de management (18) étant configurée pour faire respecter la lecture/écriture dans ces différentes zones par les différentes partitions avioniques (15, 16) ;
avantageusement, la structure de partage de données (17-1, 17-2, 17-3) est répartie entre lesdites zones (8-1, 8-2) en fonction de son besoin d'écriture/lecture de données correspondantes.

3. Plateforme (1) selon la revendication 1 ou 2, dans laquelle la structure de partage de données (17-1, 17-2, 17-3) comprend en outre au moins une métadonnée de détermination d'une adresse d'enregistrement de données à utiliser par la ou chaque partition productrice/consommatrice de données (11, 15, 16).

4. Plateforme (1) selon l'une quelconque des revendications précédentes, dans laquelle la structure de partage de données présente une structure de premier type (17-1) lorsque N est strictement supérieur à 1, la partition productrice de données correspondant au serveur IOTC (11) et chaque partition consommatrice de données correspondant à l'une des partitions avioniques (15, 16) ;
la structure de premier type (17-1) comprenant N+2 adresses d'enregistrement.

5. Plateforme (1) selon la revendication 4, dans laquelle parmi les N+2 adresses d'enregistrement de la structure de premier type (17-1) :
- deux adresses sont dédiées à l'écriture par la partition productrice de données (11) d'une donnée précédente et d'une donnée suivante ; et
- N autres adresses sont dédiées à la lecture par chacune des N partitions consommatrices de données (15, 16) dudit groupe prédéterminé, de la donnée précédente.

6. Plateforme (1) selon l'une quelconque des revendications précédentes prise en combinaison avec la revendication 4, dans laquelle l'espace mémoire partagé (8) comprend une pluralité de structure de partage de données, chaque structure de partage de données correspondant à une structure de premier type (17-1), à une structure de deuxième type (17-2) ou à une structure de troisième type (17-3).

7. Plateforme (1) selon l'une des revendications 1 à 5, dans laquelle la structure de partage de données présente une structure de deuxième type (17-2) lorsque N est égal à 1, la partition productrice de données correspondant au serveur IOTC (11) et la partition consommatrice de données correspondant à une partition avionique unique (15) ;
lesdites au moins deux adresses d'enregistrement formant une fille d'attente de lecture/écriture d'une donnée précédente et d'une donnée suivante.

8. Plateforme (1) selon l'une des revendications 1 à 5, dans laquelle la structure de partage de données présente une structure de troisième type (17-3) lorsque N est égal à 1, la partition productrice correspondant à une partition avionique unique (14) et la partition consommatrice correspondant au serveur IOTC (11);
lesdites au moins deux adresses d'enregistrement formant une fille d'attente de lecture/écriture d'une donnée précédente et d'une donnée suivante.

9. Plateforme (1) selon les revendications 6 7, et 8 dans laquelle l'espace mémoire partagé (8) comprend une structure de deuxième type (17-2) et/ou une structure de troisième type (17-3) pour chaque partition avionique (15, 16).

10. Plateforme (1) selon l'une des revendications 1, 2, 3, 5 et 7 prise en combinaison avec la revendication 4, dans laquelle l'espace mémoire partagé (8) comprend une structure de premier type (17-1) pour chaque groupe de N partitions avioniques (15, 16) partageant les données produites par le serveur IOTC (11).

11. Procédé pour l'exécution d'applications avioniques, mis en œuvre par la plateforme (1) selon l'une quelconque des revendications précédentes, comprenant l'étape d'écriture de deux données différentes dans deux adresses d'enregistrement de la ou chaque structure de partage de données (17-1, 17-2, 17-3), par la partition productrice de données.

12. Programme d'ordinateur comportant des instructions logicielles qui, lorsqu'elles sont exécutées par un dispositif électronique programmable, mettent en œuvre un procédé conforme à la revendication 11.

## Patentansprüche

1. Plattform (1) zur Ausführung von Avionik-Anwendungen, die Plattform (1) umfassend einen Mehrkernprozessor (2), einen Speicher (6, 7), eine Verwaltungseinheit (18) und eine Vielzahl von gemeinsam genutzten Ressourcen (4) umfasst, der Speicher (6, 7) umfassend:
- eine Vielzahl von Avionik-Partitionen (15, 16), die eine Vielzahl von Avionik-Anwendungen (13, 14) durch den Mehrkernprozessor (2) ausführen; und
- einen IOTC-Server (11) für einen Zugriff auf die gemeinsam genutzten Ressourcen (4) durch die Avionik-Partitionen (15, 16);
**dadurch gekennzeichnet, dass** die Plattform (1) ferner einen gemeinsam genutzten Speicherraum (8) umfasst, dessen Zugriff von der Verwaltungseinheit (18) gesteuert wird, wobei der gemeinsam genutzte Speicherraum (8) konfiguriert ist, um jegliche gemeinsame Nutzung von Daten zwischen einer datenerzeugenden Partition (11, 15, 16) und einer vorbestimmten Gruppe von N datenkonsumierenden Partitionen (11, 15, 16) ausschließlich über eine in diesem Raum (8) zugewiesene Datenteilungsstruktur (17-1, 17-2, 17-3) zu bewirken, die oder jede datenerzeugende/-konsumierende Partition (11, 15, 16), die dem IOTC-Server (11) oder einer der Avionik-Partitionen (15, 16) entspricht;
die Datenteilungsstruktur (17-1, 17-2, 17-3) umfassend mindestens zwei Registrierungsadressen umfasst, die von der datenerzeugenden Partition (11, 15, 16) zum Schreiben von zwei verschiedenen Daten verwendbar sind.

2. Plattform (1) nach Anspruch 1, wobei der gemeinsame Speicherraum (8) einen ersten gemeinsam genutzten Speicherbereich (8-1) und für jede Avionik-Partition (15, 16) einen zweiten gemeinsamen Speicherbereich (8-2) umfasst;
wobei der erste gemeinsam genutzte Speicherbereich (8-1) für alle Avionik-Partitionen (15, 16) nur lesend zugänglich ist und jeder zweite gemeinsam genutzte Speicherbereich (8-2) für die entsprechende Avionik-Partition (15, 16) zum Lesen/Schreiben zugänglich ist; die Verwaltungseinheit (18) konfiguriert ist, um die verschiedenen Avionik-Partitionen (15, 16) zu veranlassen, das Lesen/Schreiben in diesen verschiedenen Bereichen einzuhalten; vorteilhafterweise, die Datenteilungsstruktur (17-1, 17-2, 17-3) abhängig von ihrem Bedarf, entsprechende Daten zu schreiben/lesen, auf die Bereiche (8-1, 8-2) aufgeteilt ist.

3. Plattform (1) nach Anspruch 1 oder 2, wobei die Datenteilungsstruktur (17-1, 17-2, 17-3) ferner mindestens einen Metadatensatz zum Bestimmen einer Datenregistrierungsadresse umfasst, die von der oder jeder datenerzeugenden/- konsumierenden Partition (11, 15, 16) verwendet werden soll.

4. Plattform (1) nach einem der vorherigen Ansprüche, wobei die Datenteilungsstruktur eine Struktur von einem ersten Typ (17-1) aufweist, wenn N strikt größer ist als 1, die datenerzeugende Partition dem IOTC-Server (11) entspricht, und jede datenkonsumierende Partition einer der Avionik-Partitionen (15, 16) entspricht;
die Struktur von einem ersten Typ (17-1) umfassend N+2 Registrierungsadressen.

5. Plattform (1) nach Anspruch 4, wobei von den N+2 Registrierungsadressen der Struktur von einem ersten Typ (17-1):
- zwei Adressen dem Schreiben, durch die datenerzeugende Partition (11), eines vorherigen Datensatzes und eines nachfolgenden Datensatzes gewidmet sind; und
- N weitere Adressen dem Lesen des vorherigen Datensatzes durch jede der N datenkonsumierenden Partitionen (15, 16) der vorbestimmten Gruppe gewidmet sind.

6. Plattform (1) nach einem der vorhergehenden Ansprüche, genommen in Kombination mit Anspruch 4, wobei der gemeinsam genutzte Speicherraum (8) eine Vielzahl von Datenteilungsstrukturen umfasst, jede Datenteilungsstruktur einer Struktur von einem ersten Typ (17-1), einer Struktur von einem zweiten Typ (17-2) oder einer Struktur von einem dritten Typ (17-3) entspricht.

7. Plattform (1) nach einem der Ansprüche 1 bis 5, wobei die Datenteilungsstruktur eine Struktur von einem zweiten Typ (17-2) aufweist, wenn N gleich 1 ist, die datenerzeugende Partition dem IOTC-Server (11) entspricht, und die datenkonsumierende Partition einer einzelnen Avionik-Partition (15) entspricht;
die mindestens zwei Registrierungsadressen eine Warteschlange zum Lesen/Schreiben eines vorherigen Datensatzes und eines nachfolgenden Datensatzes bilden.

8. Plattform (1) nach einem der Ansprüche 1 bis 5, wobei die Datenteilungsstruktur eine Struktur von einem dritten Typ (17-3) aufweist, wenn N gleich 1 ist, wobei die erzeugende Partition einer einzelnen Avionik-Partition (14) entspricht und die konsumierende Partition dem IOTC-Server (11) entspricht;
die mindestens zwei Registrierungsadressen eine Warteschlange zum Lesen/Schreiben eines vorherigen Datensatzes und eines nachfolgenden Datensatzes bilden.

9. Plattform (1) nach den Ansprüchen 6, 7 und 8, wobei der gemeinsam genutzte Speicherraum (8) eine Struktur von einem zweiten Typ (17-2) und/oder eine Struktur von einem dritten Typ (17-3) für jede Avionik-Partition (15, 16) umfasst.

10. Plattform (1) nach einem der Ansprüche 1, 2, 3, 5 und 7, genommen in Kombination mit Anspruch 4, wobei der gemeinsam genutzte Speicherraum (8) eine Struktur von einem ersten Typ (17-1) für jede Gruppe von N Avionik-Partitionen (15, 16) umfasst, die die von dem IOTC-Server (11) erzeugten Daten gemeinsam nutzen.

11. Verfahren zur Ausführung von Avionik-Anwendungen, das von der Plattform (1) nach einem der vorherigen Ansprüche durchgeführt wird, umfassend den Schritt eines Schreibens von zwei unterschiedlichen Datensätzen in zwei Registrierungsadressen der oder jeder Datenteilungsstruktur (17-1, 17-2, 17-3) durch die datenerzeugende Partition.

12. Computerprogramm, umfassend Softwareanweisungen, die, wenn sie von einer programmierbaren elektronischen Vorrichtung ausgeführt werden, ein Verfahren nach Anspruch 11 implementieren.

## Claims

1. A platform (1) for executing avionics applications, the platform (1) comprising a multi-core processor (2), a memory (6, 7), a management unit (18) and a plurality of shared resources (4), the memory (6, 7) comprising:
- a plurality of avionics partitions (15, 16) executing a plurality of avionics applications (13, 14) by the multi-core processor (2); and
- an IOTC server (11) for access to shared resources (4) by avionics partitions (15, 16);
**characterized in that** the platform also comprises a shared memory space (8) the access of which is controlled by the management unit (18), said shared memory space (8) being configured to perform any data sharing between a producer partition (11, 15, 16) and a predetermined group of N data consuming partitions (11, 15, 16) exclusively via a data sharing structure (17-1, 17-2, 17-3) allocated in this space (8), the or each data producing/consuming partition (11, 15, 16) corresponding to the IOTC server (11) or to one of the avionics partitions (15, 16);
the data sharing structure (17-1, 17-2, 17-3) comprising at least two saving addresses which can be used by the data producing partition (11, 15, 16) for writing two different data.

2. The platform (1) according to claim 1, wherein the shared memory space (8) comprises a first shared memory zone (8-1) and for each avionics partition (15, 16), a second shared memory zone (8-2);
the first shared memory zone (8-1) being read-only accessible to all avionics partitions (15, 16) and each second shared memory zone (8-2) being read/write accessible to the corresponding avionics partition (15, 16);
the management unit (18) being configured to make the different avionics partitions follow the reading/writing in said different zones (15, 16);
advantageously, the data sharing structure (17-1, 17-2, 17-3) is distributed between said zones (8-1, 8-2) according to the need thereof to write/read corresponding data.

3. The platform (1) according to claim 1 or 2, wherein the data sharing structure (17-1, 17-2, 17-3) further comprises at least one metadatum for determining a data saving address to be used by the or each data producing/consuming partition (11, 15, 16).

4. The platform (1) according to any of the preceding claims, wherein the data sharing structure has a structure of the first type (17-1) when N is strictly greater than 1, the data producing partition corresponding to the IOTC server (11) and each data consuming partition corresponding to one of the avionics partitions (15, 16);
The structure of the first type (17-1) comprising N+2 saving addresses.

5. The platform (1) according to claim 4, wherein among the N+2 saving addresses of the structure of the first type (17-1):
- two addresses are dedicated to the writing by the data producing partition (11) of a preceding datum and a following datum; and
- N other addresses are dedicated to the reading by each of the N data consuming partitions (15, 16) of said predetermined group, of the preceding datum.

6. The platform (1) according to any of the preceding claim taken in combination with claim 4, wherein the shared memory space (8) comprises a plurality of data sharing structures, each data sharing structure corresponding to a structure of the first type (17-1), a structure of the second type (17-2) or a structure of the third type (17-3).

7. The platform (1) according one of the claim 1 to 5, wherein the data sharing structure has a structure of the second type (17-2) when N equals 1, the data producing partition corresponding to the IOTC server (11) and the data consuming partition corresponding to a single avionics partition (15);
said at least two saving addresses forming a queue for reading/writing a preceding datum and a following datum.

8. The platform (1) according one of the claim 1 to 5, wherein the data sharing structure has a structure of the third type (17-3) when N is equal to 1, the producer partition corresponding to a single avionics partition and the consumer partition (14) corresponding to the IOTC server (11);
said at least two saving addresses forming a queue for reading/writing a preceding datum and a following datum.

9. The platform (1) according to claims 6, 7 and 8, wherein the shared memory space (8) comprises a the second type structure (17-2) and/or a structure of the third type (17-3) for each of avionic partition (15, 16).

10. The platform (1) according to one of the claims 1, 2, 3, 5 and 7 taken in combination with claim 4, wherein the shared memory space (8) comprises a structure of the first type (17-1) for each group of N avionics partitions (15, 16) sharing the data produced by the IOTC server (11).

11. A method for executing avionics applications, implemented by the platform (1) according to any of the preceding claims, comprising the step of writing two different data into two saving addresses of the or each data sharing structure (17-1, 17-2, 17-3), by the data producing partition.

12. A computer program including software instructions which, when executed by a programmable electronic system, implement a method according to claim 11.
